# EUROPEAN PATENT APPLICATION

(11) **EP 2 412 335 A1**
(43) Date of publication of application: **01.02.2012**
(21) Application number: 11004260.3
(22) Date of filing: 27.09.2006
(51) Int. Cl.: A61C 8/00

(54) **Dental implant**

(30) Priority: 27.09.2005 EP 05021047; 01.12.2005 EP 05026271; 01.12.2005 US 741278 P
(62) Divisional of application: 06805913.8
(71) Applicant: DENTSPLY Friadent GmbH, 68229 Mannheim (DE)
(72) Inventor: Kahdemann, Steffen, 97215 Uffenheim (DE)
(74) Representative: Zwicker, Jörk

(57) **Abstract**

The present invention relates in general to the field of implant dentistry, namely to the design of a two-part medicinal device made of biocompatible ceramics, wherein said two-part medicinal device provides a basis for a crown or superstructure, which is easy to handle by a dentist. More precisely, the present invention relates to a two-part medicinal device comprising an implant part (1) and an abutment (12), wherein the prosthetic connection of both parts is provided by an internal connection (4a, 15a, 4b, 15b), which provides a secure connection between both parts.

## Description

The present invention relates in general to the field of implant dentistry, namely to the design of a two-part medicinal device made of biocompatible ceramics, wherein said two-part medicinal device provides a basis for a crown or superstructure, which is easy to handle by a dentist. More precisely, the present invention relates to a two-part medicinal device comprising an implant part and an abutment, wherein the prosthetic connection of both parts is provided by an internal connection, which provides a secure connection between both parts.

### BACKGROUND OF THE INVENTION

In the last decades artificial bone structures have increasingly been used for implantation in order to replace natural bones lost due to, e.g. degeneration, degradation or injury. This implantations have been performed on bones and tooth roots and have afforded good results in the remedy of defects or the recovery of functions thereof. Dental implants are commonly used to support fixed or removable prosthesis of patients when a patient's natural roots have been lost. Therefore, it is essential to provide an adequate foundation onto which a dentist can rebuild a dentition. As more people want to take advantage of more conservative approaches offered by implant dentistry, e.g., using a single implant rather that cutting down adjacent teeth to support a short span bridge to replace a missing tooth, implant dentistry has gained more and more popularity.

For dental implants it is important to be made of a non-corrosive material, which must be compatible with the surrounding tissue and which does not provoke any immunologic reactions. Usually selected metals and/or selected ceramic materials are used for implants. As metallic materials which have mainly been used for preparation of artificial bones or tooth roots, cobalt-chromium alloys, stainless steel, titanium and tantalum are exemplified. On the other hand, as ceramic materials, alumina or materials comprising mainly carbon have recently been employed.

Metallic materials are excellent in mechanical strength, particularly in impact strength, however, they do lack affinity for living tissue. When a metallic implant is used, metal ions are dissolved out of the implant and may be toxic to the bone cells around the implant. In addition, bone formation is abstracted, probably because of the larger thermal conductivity of the metallic implant if compared to a normal root. Among the metallic materials titanium, which is passivated with a thin, inert titanium oxide layer and tantalum have proven to have superior corrosion resistance and hence have been employed as fixed plates for sculls of fractured parts of bones and implants of jawbones.

Ceramic materials on the other hand show a good affinity to bones. Growing bone tissue, in particular osteoblasts can penetrate into fine pores of the ceramic materials, leading to a strong fixation. In addition, there are no adverse reactions between the ceramic material and the tissue. Further, since they are resistant to corrosion or decomposition ceramic materials have excellent durability. However, most ceramic materials possess poor impact strength, and are difficult and expensive to manufacture.

A dental implant usually comprises an implant part, intended to be implanted in the bony tissue of the mandible or of the maxilla, and a post or abutment piece, which can be transfixed onto the implant body, so that it stands up above the implant body in order to be able to accept a dental prosthesis. A so-called one-part dental implant comprises the implant part and the abutment part in one piece, in contrast, a two-part dental implant, as the name implies, is made of two pieces, thus the implant part is separable from the abutment part and is connected to the abutment part through, for example, a screw.

Although the two-part design is more difficult to manufacture, it has the advantage over the one-part design that the implant can be inserted into the bone and that the gingival tissue can be closed over the implant to allow undisturbed ingrowth of bone tissue and implantation into the bone over a course of several month, typically 3 to 6 months. In a second phase the abutment part is attached to the implant part and a crown or superstructure is attached to the abutment part.

WO 03/045368 A1 discloses a one-part dental implant comprising an anchor part for anchoring the implant in the bone and a mounting part for receiving a prosthetic superstructure. The anchor part and the mounting part are configured in one piece from zirconium oxide-based material. At least sections of the external surface of at least the anchor part are pre-treated using a subtractive removal method or are provided with a coating which supports ossification.

WO 2004/096075 A1 describes a one-part dental implant comprising a base body with a threaded section and a pin for mounting a dental crown, wherein the body base being in one piece. In addition, this one-piece base body is at least largely made from zirconium oxide or a mixture of zirconium oxide and aluminium.

EP 1 570 804 A1 describes a two-part dental implant, which comprises an outer body made of ceramic or metal and an inner body made of metal or ceramic, provided that when the outer body is made of metal the inner body is made of ceramic and when the outer body is made of ceramic the inner body is made of metal.

WO 2005/044133 discloses a two-part dental implant, which consists of a base body comprising a threaded part and a post section, onto which a crown is secured. The base body is divided, so that the post elements surrounding the post section, can be removed from the remaining base body comprising the threaded part.

WO 00/32134 describes a two-part implant which is designed so that the areas intended for bone apposition exhibit a scalloped appearance, including both convex, and concave patterns to follow the naturally occurring bone morphology. Thus, the disclosed implants provide attachment possibilities for both bones and soft tissue, thereby effecting both hard- and soft- tissue preservation.

Currently there are different techniques possible which are primarily used for producing dental implants made of ceramic materials for example: forming of a ceramic body, e.g. by injection moulding or isopressing, or grinding out of a densely sintered like HIP (High Isostatic Pressing) ceramic blank.

Injection moulding has the advantages that a serial production is possible and that almost all designs of a dental implant are possible. However, the design of a prototype injection mould is difficult and/or expensive and therefore the variability of this method, i.e. the number of different implant designs which can be produced economically is quite low. Since in most cases a postproduction is needed, the material is not densely enough sintered at the injection moulding step, leading to defects in the material and, thus, to a high rejection rate.

Grinding out of a densely sintered HIP cylindrical blank has the advantage that it is very precise due to the CAD/CAM-technique and thus a high variability in the design of the dental implant is possible. Since the material is already densely sintered, the rejection rate is very low. However, it is an expensive method and due to the hardness of the material it is difficult to grind indentations into the implant body, such as it is needed, for example, for a conical internal connection. Further, grinding the material leads to so-called mini-cracks (rifts), which might have an influence on the quality and stability of the implant. Thus, with this method it is nearly impossible to provide an internal connection having securing means (antirotation), as well as to provide a screwed joint.

The two-part ceramic dental implant designs known from the prior art suffer among others from the fact that they do not yet provide a design suitable to be produced by an affordable technique known in the art and that no suitable durable connection between the two-parts of the dental implant is provided.

### SUMMARY OF THE INVENTION

In one aspect the present invention provides a dental implant (1) made of biocompatible ceramics having an outer threaded part (2); a contact region (3) for contacting an abutment (12); an indentation (4a) within the contact region (3) suitable to insert a protrusion (15a) of said abutment (12), wherein the contact surface of said indentation (4a) with said protrusion (15a) is essentially free of threaded parts; and securing means (5) preventing rotation of an engaged abutment (12) in the form of a multifaced protrusion (6) located in said contact region (3).

In another aspect the present invention provides a dental implant (1) made of biocompatible ceramics having an outer threaded part (2); a contact region (3) for contacting an abutment (12), an indentation (4a) within the contact region (3) suitable to insert a protrusion (15a) of said abutment (12); wherein the contact surface of said indentation (4a) with said protrusion (15a) is essentially free of threaded parts; and securing means (5) preventing rotation of an engaged abutment (12) in the form of a multifaced indentation (7) located in said contact region (3).

In a further aspect the present invention provides a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is essentially free of threaded parts; and securing means (5) preventing rotation of an engaged abutment (12) in the form of a multifaced protrusion (6) located in said contact region (3).

In a further aspect the present invention concerns a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is essentially free of threaded parts, and securing means (5) preventing rotation of an engaged abutment (12) in the form of a multifaced indentation (7) located in said contact region (3).

In another aspect the present invention relates to a dental implant (1) made of biocompatible ceramics having an outer threaded part (2); a contact region (3) for contacting an abutment (12); and an indentation (4a) within the contact region (3) suitable to insert a protrusion (15a) of said abutment (12), wherein the contact surface of said indentation (4a) with said protrusion (15a) is essentially free of threaded parts; and wherein the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a further aspect the present invention provides a dental implant (1) made of biocompatible ceramics having an outer threaded part (2); a contact region (3) for contacting an abutment (12); and a protrusion (4b) within the contact region (3) suitable to be inserted into an indentation (15b) of said abutment (12), wherein the contact surface of said protrusion (4b) with said indentation (15b) is essentially free of threaded parts; and wherein the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In one embodiment the present invention concerns an abutment (12) made of biocompatible ceramics, having a prosthetic head (13) and a contact region (14) with a protrusion (15a), suitable to be inserted in an indentation (4a) of a contact region (3) of a dental implant (1) according to the present invention.

In another embodiment the present invention relates to an abutment (12) made of biocompatible ceramics, having a prosthetic head (13) and a contact region (14) with an indentation (15b), suitable to be connected to the protrusion (4b) of a contact region (3) of a dental implant (1) according to the present invention.

In a further embodiment the present invention provides a two-part dental implant made of biocompatible ceramics comprising a dental implant (1) and an abutment (12) according to the present invention.

In one embodiment the present invention concerns a three-part dental implant made of biocompatible ceramics comprising a dental implant (1) according to the present invention, an abutment (12) according to the present invention and a crown or superstructure.

In another embodiment the present invention relates to the use of the dental implant (1) as described above for insertion into the mandibular or maxillary bone of a patient.

In a further embodiment the present invention concerns the use of the abutment (12) as described above for the connection to a dental implant (1) described above

In one embodiment the present invention pertains to the use of an abutment (12) described above as a prosthetic head for a crown or superstructure.

### DESCRIPTION OF THE PREFERRED EMBODIMENTS OF THE INVENTION

Before the present invention is described in more detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Several documents are cited throughout the text of this specification. Each of the documents cited herein (including all patents, patent applications, scientific publications, manufacturer's specifications, instructions, etc.), whether supra or infra, are hereby incorporated by reference in their entirety. Nothing herein is to be construed as an admission that the invention is not entitled to antedate such disclosure by virtue of prior invention.

As outlined above there is a need in the prior art to provide a stable connection between the implant part and the abutment part of a two-part dental implant made of biocompatible ceramics.

In a first aspect the present invention provides a dental implant (1) made of biocompatible ceramics having an outer threaded part (2); a contact region (3) for contacting an abutment (12); an indentation (4a) within the contact region (3) suitable to insert a protrusion (15a) of said abutment (12), wherein the contact surface of said indentation (4a) with said protrusion (15a) is essentially free of threaded parts; and securing means (5) preventing rotation of an engaged abutment (12) in the form of a multifaced protrusion (6) located in said contact region (3).

In one embodiment of the dental implant (1) according to the first aspect of the present invention the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a second aspect the present invention provides a dental implant (1) made of biocompatible ceramics having an outer threaded part (2); a contact region (3) for contacting an abutment (12), an indentation (4a) within the contact region (3) suitable to insert a protrusion (15a) of said abutment (12); wherein the contact surface of said indentation (4a) with said protrusion (15a) is essentially free of threaded parts; and securing means (5) preventing rotation of an engaged abutment (12) in the form of a multifaced indentation (7) located in said contact region (3).

In one embodiment of the dental implant (1) according to the second aspect of the present invention the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a third aspect the present invention provides a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is essentially free of threaded parts; and securing means (5) preventing rotation of an engaged abutment (12) in the form of a multifaced protrusion (6) located in said contact region (3).

In one preferred embodiment of the dental implant (1) according to the third aspect of the present invention the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a fourth aspect the present invention provides a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is essentially free of threaded parts, and securing means (5) preventing rotation of an engaged abutment (12) in the form of a multifaced indentation (7) located in said contact region (3).

In one preferred embodiment of the dental implant (1) according to the fourth aspect of the present invention the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a fifth aspect the present invention provides a dental implant (1) made of biocompatible ceramics having an outer threaded part (2); a contact region (3) for contacting an abutment (12); and an indentation (4a) within the contact region (3) suitable to insert a protrusion (15a) of said abutment (12), wherein the contact surface of said indentation (4a) with said protrusion (15a) is essentially free of threaded parts; and wherein the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a sixth aspect the present invention provides a dental implant (1) made of biocompatible ceramics having an outer threaded part (2); a contact region (3) for contacting an abutment (12); and a protrusion (4b) within the contact region (3) suitable to be inserted into an indentation (15b) of said abutment (12), wherein the contact surface of said protrusion (4b) with said indentation (15b) is essentially free of threaded parts; and wherein the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In one preferred embodiment of the dental implant (1) according to the fifth and sixth aspect of the present invention said contact region (3) has securing means (5) preventing rotation of an engaged abutment (11).

The term "contact region (3)" refers to the entire surface of the dental implant that contacts the corresponding contact region (14) of the abutment. In the embodiments of the dental implant of the present invention comprising a securing means (6,7) this securing means is a separate feature from the indentation (4a) or protrusion (4b) within the contact region (3), characterized by a diameter, shape and/or length different from the indentation (4a) or protrusion (4b).

The securing means of any of the embodiments of the invention may also be used for the insertion of the dental implant (11) into the bones, i.e. with a "wrench-like" tool that engages the securing means. The securing means (5) can have any shape, which if brought into contact with a corresponding securing means on the abutment (17,18) prevents rotation of the abutment relative to the dental implant along the longitudinal axis of the dental implant. The securing means (5) is preferably in the form of a multifaced protrusion (6) or indentation (7) located in the contact region (3), preferably a multifaced protrusion (6) located in the contact region (3), most preferably a multifaced protrusion (6) located in the middle of said contact region (3). This protrusion (6) or indentation (7) is a separate feature within the contact region (3), i.e. the securing means is provided in addition to any indentation (4a) or protrusion (4b) also located in the contact region. The securing means whether it is a protrusion (6) or indention (7) preferably has a larger diameter than any indentation (4a) or protrusion (4b).Thereby the securing means provides an additional interaction surface at the contact region (3) between the abutment and the dental implant, which prevents the breaking of either the protrusion (4b) of the dental implant (1) penetrating the indentation (15b) of the abutment or the protrusion of the abutment (15a) penetrating the indentation (4a) of the dental implant (1). Preferably the diameter of the protrusion (6) or indentation (7) of the securing means is 1.5 to 3-fold, preferably 1.6, 1.7, 1.8, 1.9, 2, 2.1, 2.2, 2.3, 2.4, 2.5, 2.6, 2.7, 2.8, 2.9-fold the diameter of the protrusion (4b) or indentation (4a) or any range defined by two of the various indicated preferred ratios of the respective diameters.

Preferably the protrusion (6) or indentation (7) has a diameter that is equal or slightly smaller, i.e. more than 70%, preferably more than 75%, more than 80%, more than 85%, more than 90% or more than 95% of the outer diameter (o) of the threaded part (2), i.e. 1.5 to 7 mm, e.g. 1.5, 2, 3, 4, 5, 6 or 7 mm or any range defined by two of this preferred values, more preferably between 2 and 6 mm, most preferably between 2.5 and 5.5 mm.

In a preferred embodiment of the dental implant (1) according to the present invention said securing means are of polygonal shape (8) preferably said polygonal shape (8) has n-faces, whereas "n" can be any number between 1 and 50, e.g. 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces or any range defined by the various numbers. Preferably the normal vector of the faces of the polygonal shaped protrusion or indentation are perpendicular to the longitudinal axis of the dental implant or the angle between the normal and the longitudinal axis is larger than 80%. The shape of the corresponding securing means of the abutment is determined by the shape of the securing means of the dental implant. Measured from the distal flank of the middle part (11) the length of the protrusion (6) or the depth of the indentation (7) will typically have a length/depth of 0.5 to 3 mm, preferably 1.0 to 2.0 mm, preferably 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 or any range defined by these numbers. Due to its larger diameter the multifaced protrusion (6) will generally have a surface that is flat or essentially flat and perpendicular to the longitudinal axis of the dental implant The smaller diameter protrusion (4b) or indentation (4a) will usually be located in the middle of this plane, preferably along the longitudinal axis. Similarly, also the multifaced indentation (7) will preferably have a flat or essentially flat surface wherein the protrusion (4b) or indentation (4a) is located, preferably along the longitudinal axis.

In one preferred embodiment of the dental implant (1) according to the present invention a surface area of said outer threaded part (2) has a micro roughness of between 2 micron and 50 micron, e.g. 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably between 4 micron and 20 micron to facilitate the ingrowth of osteoblasts and the stable attachment of bone tissue to the implant. It is well known in the art how to measure surface roughness, for example with an alphastep 250 profilometer. The micro roughness provides an excellent contact surface for osteoblasts, which attach to the dental implant and faster "osseo-integration", which is a prerequisite for permanent adherence to the contacting bone surface. Therefore a suitable micro roughness of the implant surface provides a mechanical interlocking between the bone and the implant. Preferably the surface area having above indicated micro roughness covers at least 20 %, more preferably at least 30 %, more preferably at least 40 %, more preferably at least 50 %, more preferably at least 60 %, more preferably at least 70 %, more preferably at least 80 %, more preferably at least 90 % of the surface area of the outer threaded part (2).

The required surface roughness can be achieved by a variety of art known methods including without limitation blasting with aluminium oxide after the implant has been sintered or the roughness can already be achieved through the design of the mould used for forming the ceramic green body during injection moulding or isopressing or the roughness can be achieved through coating with a biocompatible material e.g. ceramic or any biomaterial which could be suitable to achieve a better implant to bone contact or by surface manipulation through a laser technique.

In another embodiment of the dental implant (1) according to the present invention said outer threaded part (2) has a diameter and length suitable to be inserted into the mandibular or maxillary bone. Ideally all roots of teeth have been removed prior to drilling the hole into which the dental implant is placed. However, it is also possible to drill a hole into a bone still comprising all or parts of a natural root. The dental implant is ultimately stabilized and securely attached to the bone by the ingrowth of osteoblasts into the dental implant. In addition an outer threaded part (2) is provided which serves the purpose of mechanical stabilizing the dental implant in the bone.

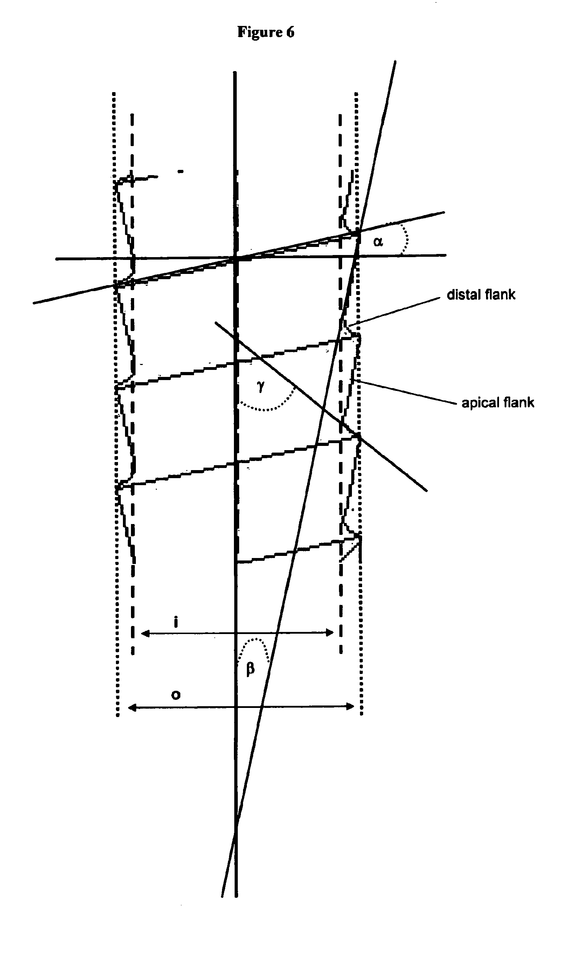

The threaded part can have any art known form. The thread can be either right handed or left handed and can have a wide variety of pitches and thread shapes. Preferably the thread lead has a pitch (α) of between 6 and 18 degree, e.g. 6, 7, 8, 9, 10, 11, 12, 13, 14, 15, 16, 17, or 18 degree or is within any range defined by two values of the preferred pitches (α), preferably pitch (α) is between 8 and 15 degree and more preferably about 12 degree. As is apparent from Fig. 6 the pitch of the thread lead is determined as the projection of the thread on the screw cross section. The distance between one turn of the thread to the next turn is preferably of between 1 and 2 mm, more preferably of between 1.2 and 1.8 mm, more preferably of between 1.4 and 1.6 mm and most preferably about 1.5 mm.

In one preferred embodiment there is a difference between the core drilling (the "inner diameter (i)") and the edge of each turn of the thread (the "outer diameter (o)"), wherein said difference is preferably of between 0.1 and 3.0 mm, preferably 0.5 to 1.5 mm, more preferably about 1 mm. This difference is also referred to as the "depth of the thread". The respective difference depends in part on the respective outer diameter (o). It is preferred that, that the inner diameter (i) is 10 to 20% smaller than the outer diameter (o).

In another preferred embodiment of the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In another preferred embodiment of the thread-profile of said outer threaded part (2) comprises an apical flank and a distal flank. It is further preferred, that the distal flank immediately contacts the apical flank, i.e. without an intervening section, which is e.g. parallel to the longitudinal axis. The contact point between the distal and the apical flank can be rounded. Preferably, the faces of the apical and/or distal flank are essentially plane, preferably plane, over the whole length of the flank, e.g. at least over a length of 80%, 85%, 90%, 91%, 92%, 93%, 94%, or 95%, 96%, 97% or 98% of the entire length of the flank. The length of the flank is the length of the surface of the flank between the points, where the flank reaches the inner and outer diameter, respectively. Preferably the flanks comprise a small section at each end, i.e. at the connection point with the next flank, which is not plane but rounded. The length of this section preferably varies between 1% and 15%, e.g. 1%, 2%, 3%, 4%, 5%, 6%, 7%, 8%, 9%, 10%, 11%, 12%, 13%, 14%, 15% of the entire length of a given flank, or is within any range defined by two values of the preferred length of this section. Preferably, the acute angle (β) between the apical flank and the longitudinal axis is smaller than the acute angle (γ) between the distal flank and the longitudinal axis.

In one preferred embodiment the apical flank has an acute angle (β) to the longitudinal axis of between 5 and 20 degree, e.g. 5, 6, 7, 8, 9, 10, 11, 12, 13, 14, 15, 16, 17, 18, 19 or 20 degree or any range defined by two values of the preferred acute angles (β), preferably of between 8 and 15 degree and more preferably about 10 degree. In addition, the distal flank has an acute angle (γ) to the longitudinal axis of between 40 and 60 degree, e.g. 40, 41, 42, 43, 44, 45, 46, 47, 48, 49, 50, 51, 52, 53, 54, 55, 56, 57, 58, 59, or 60 degree or any range defined by two values of the preferred acute angles (γ), preferably of between 45 and 55 degree and more preferably about 50 degree. Thus, a kind of skewback in the bone is observed.

It is preferred that the threaded part (2) has the same thread parameters, e.g. pitch of the thread lead, depth of the thread and thread profile (angle (β) and angle (γ), length of the plane section, form of the contact points of the apical and distal flank) over the entire length. Accordingly, it is preferred that the dental implant comprises only one thread type.

In a preferred embodiment the apical peak of the threaded part is preferably conically formed meeting preferably in a blunt bottom. The cone at the apical peak preferably has a radius of between 1.5 and 2.5 mm, e.g. 1.1, 1.2, 1.3, 1.4, 1.5, 1.6, 1.7, 1.8, 1.9, 2.0, 2.1, 2.2, 2.3, 2.4, or 2.5 or any range defined by two values of the preferred radiuses, preferably 2.0 mm.

In a preferred embodiment of the dental implant (1) according to the present invention said outer threaded part (2) has a length of between 2 and 20 mm, e.g. 2, 3, 4, 5, 6, 7, 8, 9, 10, 11, 12, 13, 14, 15, 16, 17, 18, 19, or 20 mm or the length is within any range defined by two values of the preferred lengths, preferably between 8 and 15 mm.

The outer diameter of the threaded part is preferably between 1.5 and 7 mm, e.g. 1.5, 2, 3, 4, 5, 6 or 7 mm or the diameter is within any range defined by two values of the preferred diameters, more preferably between 2 and 6 mm, most preferably between 2.5 and 5.5 mm.

It is particularly preferred that the dental implant according to the invention has a length of between 2 and 20 mm an outer diameter of between 1 and 7 mm is preferred, and at a length of between 8 and 15 mm an outer diameter of between 2.5 and 5.5 mm is preferred.

The outer threaded part (2) will in most embodiments extend over the entire length of the part of the dental implant inserted into the bone. These threads are preferably present on the cylindrical sections of the dental implant of the present invention, while a tip, which might be attached at the apical end of the dental implant, will preferably not comprise threads. Such a tip can have any shape as long as its diameter does not extend over the diameter of the outer threaded part (2) to which it is attached, i.e. the outer diameter of the outer threaded part, preferably its diameter does not extend beyond the inside diameter of the outer threaded part (2). The tip preferably has a round, pointed or blunt shape. As it is not always required that the entire part of the threaded implant inserted into the bone is threaded, the dental implant in some embodiments comprises further parts inserted into the bone, which are not threaded. These one or more further parts are preferably located towards the apical end of the dental implant and/or towards the contact region, preferably towards the transgingival part (9). Preferably any further part which is not threaded and is inserted into the bone is also provided with a rough surface as defined above.

In a preferred embodiment of the dental implant (1) according to the present invention the dental implant (1) further comprises in one piece a transgingival part (9). The transgingival part extends over the bone tissue, but will in most embodiments not extend over the gingival tissue of the patient. Accordingly, it will be possible in most embodiments to close the gingival flap after implantation of the dental implant to allow undisturbed ingrowth of the dental implant.

In another embodiment of the dental implant (1) according to the present invention said contact region (3) is localized on the transgingival part (9) of the dental implant (1).

In a preferred embodiment of the dental implant (1) according to the present invention the said transgingival part (9) has preferably a total length of between 1 to 4 mm and a diameter of between 2 to 9 mm, wherein the difference in diameter between the outer diameter of the threaded part (2) is preferably in the range of 0.1 to 2 mm, more preferably 0.3 to 1.0 mm. In one embodiment the diameter of the transgingival part (9) can change over the length of the transgingival part (9) to form, e.g. securing means.

In one preferred embodiment of the dental implant (1) according to the present invention the transgingival part (9) a middle part (11), securing means (5), and the contact region (3).

In another preferred embodiment said transgingival part (9) is connected to the outer threaded part (2) via a conical junction (10), which preferably does not extend the bone. Said conical junction (10) preferably has an angle towards the contact region of between 1 and 7 degree, e.g. 1, 2, 3, 4, 5, 6 or 7 degree, preferably of between 2 and 5 degree and a length of between 0.3 to 3 mm, e.g. 0.3, 1, 2 or 3 mm, preferably of between 0.5 and 1.5 mm, more preferably about 1 mm. In addition, said middle part (11) has a cylindrical shape and a length of between 0.1 to 3 mm, e.g. 0.1, 1, 2 or 3 mm, preferably of between 0.2 and 1.5 mm, more preferably about 1 mm.

In another preferred embodiment of the dental implant (1) according to the present invention the diameter of said contact region (3) is smaller in diameter than the cylindrical middle part (11), wherein the diameter of said cylindrical middle part is bigger than the diameter of the threaded part (2).

In one embodiment of the dental implant (1) according to the present invention a surface roughness of said transgingival part (9) has a micro roughness of less than 2 micron, more preferably of less than 1 micron.

In a further embodiment of the dental implant (1) according to the present invention the cross section of said indentation (4a)/or protrusion (4b) at the contact region (3) is selected from the group of cross sections, oval and multifaced.

In one embodiment of the dental implant (1) according to the present invention the indentation (4a) has a length of between 1 and 19 mm, e.g. 1, 2, 3, 4, 5, 6, 7, 8, 9, 10, 11, 12, 13, 14, 15, 16, 17, 18, or 19 mm, preferably of between 1 and 10 mm, more preferably of between 1 and 7 mm, wherein said indentation (4a) essentially extends throughout the length of the dental implant (1), preferably without protruding from the apical part of the dental implant, i.e. preferably the dental implant does not comprise a hole at the apical part. The respective maximal length of the indentation (4a) is determined by the size of the threaded part of the dental implant.

In one embodiment of the dental implant (1) according to the present invention the protrusion (4b) has a length of between 1 and 19 mm, e.g. 1, 2, 3, 4, 5, 6, 7, 8, 9, 10, 11, 12, 13, 14, 15, 16, 17, 18, or 19 mm, preferably of between 1 and 10 mm, more preferably of between 1 and 7 mm, most preferably of between 1 and 4 mm.

If the dental implant comprises a multifaced protrusion (6) as securing means the length of the indentation (4a) or the protrusion (4b) is measured from the distal end of the securing means, e.g. the plane or essentially plane surface. If the dental implant comprises a multifaced indentation (7) as securing means the length of the indention (4a) or protrusion (4b) is measured from the distal end of the indentation, e.g. the plane or essentially plane surface.

The respective length of the protrusion (4b) and indentation (4a) is preferably chosen in such that once the protrusion (4b) is engaged with the indentation of the abutment (15b) or the indentation (4a) is engaged with the protrusion of the abutment (15a) that a space of 0.1 to 2.0 mm length remains between the end of the protrusion (4b, 15a) and the bottom of the indentation (4a, 15b). This space can, e.g. hold excess adhesive applied to the dental implant or the abutment.

In another embodiment of the dental implant (1) according to the present invention the indentation (4a)/or protrusion (4b) has a diameter of between 0.5 and 6 mm, e.g. 0.5, 1, 2, 3, 4, 5 or 6 mm, preferably of between 1 and 4 mm, more preferably between 1 and 2, wherein the diameter might vary over the length of said indentation (4a)/or protrusion (4b). Preferably, the form and width of the cross section does not change over the length of the indentation (4a)/or protrusion (4b), however, it also can be tapered towards the bottom of the indentation (4a)/or protrusion (4b). It is also possible that the cross section changes over the length between any of above preferred forms of the cross section as long as this change does not prevent the close contact between said indentation (4a)/or protrusion (4b) and said protrusion (15a)/or indentation (15b) of the engaged abutment (12). The respective maximal diameter of the indentation (4a)/or protrusion (4b) is determined by the inner diameter of the threaded part in case of the indentation (4a) or the outer diameter of the abutment (12) in case of the protrusion (4b). The diameter has to be sufficient to provide resistance against lateral forces, which are typically applied to the abutment during use and should not be so large to reduce the stability of either the threaded part or the abutment part. A sufficient wall thickness of the threaded part would, i.e. the thickness of the ceramic material between the inner diameter of the threaded part (2) and the indentation (4a) or the thickness of the ceramic material between the outer diameter of the abutment (12) and the protrusion (4b) extending into the abutment, should be at least 0.5 mm for small dental implants, e.g. 1.5 to 2 mm diameter and should be at least 0.8 mm for larger diameter implants. Typically, the relation of the diameter of the indentation (4a) to thickness of the wall will be in the range from 1:2 to 2:1.

In another preferred embodiment of the dental implant (1) according to the present invention the biocompatible ceramics comprises a ceramic material selected from the group consisting of zirconium oxide, aluminium oxide, yttrium oxide, hafnium oxide, silicon oxide, magnesium oxide, cerium oxide and other metal oxides. The pure or mixed ceramic materials can have various crystal forms including, for example, trigonal, hexagonal etc. as can be found, e.g. in ruby and sapphire. Preferably, the ceramic material consist of zirconium oxide, hafnium oxide, yttrium oxide, aluminium oxide and other metal oxides.

In a preferred embodiment, 90 to 99,9 % of the ceramic composition comprises zirconium oxide, yttrium oxide and hafnium oxide and 0.01% to 10 % aluminium oxide and other metal oxides, preferably 95 to 99,9 % of the ceramic composition comprises zirconium oxide, yttrium oxide and hafnium oxide and 0.01 to 5 % aluminium oxide and other metal oxides, more preferably 98 to 99,9 % of the ceramic composition comprises zirconium oxide, yttrium oxide and hafnium oxide and 0.01 to 2 % aluminium oxide and other metal oxides, more preferably 99 to 99,9 % of the ceramic composition comprises zirconium oxide, yttrium oxide and hafnium oxide and 0.01 to 1 % aluminium oxide and other metal oxides, e.g. 99.72 % of the ceramic composition will be composed of zirconium oxide, yttrium oxide and hafnium oxide.

In a preferred embodiment the ceramic composition comprises 88 to 95 % by weight of zirconium oxide, 3 to 7 % by weight yttrium oxide, 1 to 4 % by weight of hafnium oxide, 0.1 to 1 % by weight aluminium oxide and 0.01 to 0.5% of other metal oxides, preferably the ceramic composition comprises 90 to 94 % by weight of zirconium oxide, 4 to 6 % by weight yttrium oxide, 1.5 to 2.5 % by weight of hafnium oxide, 0.2 to 0.5 % by weight aluminium oxide and 0.02 % to 0.2 of other metal oxides, more preferably the ceramic composition comprises 92 to 93 % by weight of zirconium oxide, 5 to 6 % by weight yttrium oxide, 2 to 3 % by weight of hafnium oxide, 0.2 to 0.3 % by weight aluminium oxide and 0.02 to 0.05 % of other metal oxides, e.g. 92.61% by weight of zirconium oxide, 5.08% by weight yttrium oxide, 2.03% by weight of hafnium oxide, 0.254% by weight aluminium oxide and 0.036% of other metal oxides.

In another aspect of the present invention, the object thereof is solved by providing an abutment (12) made of biocompatible ceramics, having a prosthetic head (13) and a contact region (14) with a protrusion (15a), suitable to be inserted in an indentation (4a) of a contact region (3) of a dental implant (1) according to the present invention.

In a further aspect of the present invention, the object thereof is solved by providing an abutment (12) made of biocompatible ceramics, having a prosthetic head (13) and a contact region (14) with an indentation (15b), suitable to be connected to the protrusion (4b) of a contact region (3) of a dental implant (1) according to the present invention.

In one embodiment of the abutment (12) according to the present invention said protrusion (15a)/or indentation (15b) is essentially free of any threaded parts.

In another embodiment of the abutment (12) according to the present invention the cross section of said protrusion (15a)/or indentation (15b) is selected from the group of cross sections consisting of round, oval, and multifaced. In addition, the protrusion (15a) has a length of between 1mm and the length of the corresponding dental implant, preferably I and 19 mm, e.g. 1, 2, 3, 4, 5, 6, 7, 8, 9, 10, 11, 12, 13, 14, 15, 16, 17, 18, or 19 mm, preferably between 1 and 10 mm, more preferably of between 1 and 7 mm. Further, the indentation (15b) has a length of between 1 mm and the length of the abutment, preferably 1 and 10 mm, e.g. 1, 2, 3, 4, 5, 6, 7, 8, 9, or 10, preferably between 1 and 5 mm, more preferably between 1 and 4 mm.

In one embodiment of the abutment (12) according to the present invention the protrusion (15a)/or indentation (15b) has a diameter of between 0.5 and 6 mm, e.g. 0.5, 1, 2, 3, 4, 5 or 6 mm, preferably between 1 and 4 mm, more preferably between 1 and 2, wherein the diameter might vary over the length of said protrusion (15a)/or indentation (15b). Preferably, the form and width of the cross section does not change over the length of the protrusion (15a)/or indentation (15b), however, it also can be tapered towards the bottom of the protrusion (15a)/or indentation (15b). It is also possible that the cross section changes over the length between any of above preferred forms of the cross section as long as this change does not prevent the close contact between the protrusion (15a)/or indentation (15b) and the indentation (4a)/or protrusion (4b) of the engaged dental implant (1).

In a preferred embodiment of the abutment (12) according to the present invention the contact region (14) has securing means (16) preventing rotation of an engaged dental implant (1). The term "contact region (14)" refers to the entire surface of the abutment (12) that contacts the corresponding contact region (3) of the dental implant (1). In the embodiments of the dental implant of the present invention comprising a securing means (16,17,18) this securing means is a separate feature from the indentation (15b) or protrusion (15a) within the contact region (14), characterized by a diameter, shape and/or length different from the indentation (15b) or protrusion (15a). The securing means can have any shape, which if brought into contact with a corresponding part on the dental implant, prevents rotation. Preferably, the securing means (16) is in the form of a multifaced protrusion (17) or indentation (18) in the contact region (14). Whether the abutment (12) is respectively provided with a protrusion (17) or indentation (18) depends on whether the corresponding dental implant to which the abutment will be attached comprises a multifaced indentation (7) and a protrusion (6), respectively. This multifaced protrusion (17) or indentation (18) is a separate feature within the contact region (14), i.e. the securing means is provided in addition to any indentation (15b) or protrusion (15a) also located in the contact region. The securing means whether it is a protrusion (17) or indention (18) preferably has a larger diameter than any indentation (15b) or protrusion (15a). Thereby the securing means provides an additional interaction surface at the contact region (14) between the abutment and the dental implant, which prevents the breaking of either the protrusion (4b) of the dental implant (1) penetrating the indentation (15b) of the abutment (12) or the protrusion (15a) of the abutment (12) penetrating the indentation (4a) of the dental implant (1). Preferably the diameter of the protrusion (17) or indentation (18) of the securing means is 1.5 to 3-fold, preferably 1.6, 1.7, 1.8, 1.9, 2, 2.1, 2.2, 2.3, 2.4, 2.5, 2.6, 2.7, 2.8, 2.9-fold the diameter of the protrusion (4b) or indentation (4a) or any range defined by two of the various indicated preferred ratios of the respective diameters.

Preferably the protrusion (17) or indentation (18) has a diameter that is equal or slightly smaller, i.e. more than 70%, preferably more than 75%, more than 80%, more than 85%, more than 90% or more than 95% of the outer diameter (o) of the threaded part (2), i.e. 1.5 to 7 mm, e.g. 1.5, 2, 3, 4, 5, 6 or 7 mm or any range defined by two of this preferred values, more preferably between 2 and 6 mm, most preferably between 2.5 and 5.5 mm.

More preferably, said multifaced protrusion (17) or indentation (18) is of a polygonal shape (8), wherein said polygonal shape (8) has n-faces, whereas "n" can be any number between 1 and 50, e.g. 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces. Above further preferred embodiments of the protrusions (6) and indentation (7) of the dental implant have been described. It is understood by someone of skill that the design of a correspond securing means of the abutment is determined by the size and shape of the securing means of the dental implant. Accordingly, the securing means of the abutment may have all the shapes determined by the respectively indicated preferred securing means of the dental implant (1).

In one embodiment of the dental implant according to the present invention the prosthetic head (13) of the abutment has a width and/or length suitable to avoid a post-processing step. Most prior art implants have a voluminous prosthetic head, which has to be further processed after implantation to allow attachment of, e.g. the crown or superstructure. Post-processing steps, e.g. grinding of the prosthetic head, is often accompanied with an impairment of the prosthetic head and, therefore, avoiding this step provides a further advantage to the dental implants of the present invention. While the teeth between two patients do not markedly vary in their length there is a large variation laterally between similar teeth of two persons. Thus, a post-processing step is always necessary in cases when the dental implant has a width, which given the respective lateral space available will not allow the attachment of, e.g. a crown or superstructure. No post-processing steps are needed, when the width of the prosthetic head is selected in such that it is appropriate for the respective tooth space to be closed. Thus, in a preferred embodiment the width of the prosthetic head (13) of the abutment is within the range of 2.0 to 11.0 mm, e.g. 2, 3, 4, 5, 6, 7, 8, 9, or 10 mm, or is within any range defined by two of these numbers, more preferably in the range of 2.5 to 8.0 mm, even more preferably in the range of 3.0 to 7.0 mm and most preferably in the range of about 3.5 to about 5.8 mm, preferably at the apical end of the abutment, wherein the diameter might vary over the length. Preferably, the prosthetic head has a length of between 2 and 10 mm, e.g. 1, 2, 3, 4, 5, 6, 7, 8, 9, or 10 mm, preferably of between 3 and 5 mm, preferably of between 2 and 4 mm, measured from the contact region (14) to the coronal region of said abutment (12).

In a further preferred embodiment the present invention provides a set of abutments varying in the width of the prosthetic head (13). The dentist will then be capable to select one abutment with a width suitable to attach, e.g. a crown or superstructure, or with a size suitable to fill the gap. Such a set of abutments comprises at least 2 abutments with prosthetic heads with different width and optionally corresponding dental implants (1). Preferably, the two widths are within above ranges and preferred ranges. A particular preferred set comprises 3, 4, 5, 6, 7, 8, 9, 10, 11, 12, 13, 14, 15, 16, 17, 18, 19 or 20 abutments each having a prosthetic head (13) with different diameters, preferably equally distributed in the range of 2.0 to 11.0 mm, more preferably in the range of 2.5 to 8.0 mm, even more preferably in the range of 3.0 to 7.0 mm and most preferably in the range of about 3.5 to about 5.8 mm.

In another preferred embodiment the prosthetic head (13) is of conical shape. In this embodiment it has above indicated preferred widths at its base and is tapered to the top. The tapering is preferably with an angle of between 1° to 15°, e.g. 1°, 2°, 3°, 4°, 5°, 6°, 7°, 8°, 9°, 10°, 11°, 12°, 13°, 14°, or 15°. This tapering facilitates the attachment of crowns or superstructures and/or the scanning of the prosthetic head once the abutment of the present invention has been attached to the dental implant of the present invention. Such a scan can then be used, e.g. to manufacture the crown or superstructure to be attached to the prosthetic head, e.g. by CAD/CAM devices or by a dental technician, in such a way that it on one hand fits exactly to the protruding prosthetic head (13) and on the other hand will be positioned correctly with respect to the surrounding teethes.

In another embodiment of the abutment (12) according to the present invention said abutment is designed to consistently engage with the dental implant (1) according to the present invention.

In one embodiment of the abutment (12) according to the present invention said abutment (12) is wider in diameter than the engaged dental implant (1) and has a conical shape towards the coronal end, with an angle of between 1 and 10 degree, e.g. 1, 2, 3, 4, 5, 6, 7, 8, 9, or 10, preferably of between 2 and 5, more preferably 3 degree with respect to the longitudinal axis of the abutment (12).

In a preferred embodiment of the abutment (12) according to the present invention the biocompatible ceramics comprises a ceramic material selected from the group consisting of zirconium oxide, aluminium oxide, yttrium oxide, hafnium oxide, silicon oxide, magnesium oxide, cerium oxide and other metal oxides. The pure or mixed ceramic materials can have various crystal forms including, for example, trigonal, hexagonal etc. as can be found, e.g. in ruby and sapphire. Preferably, the ceramic material consist of zirconium oxide, hafnium oxide, yttrium oxide, aluminium oxide and other metal oxides.

In a preferred embodiment, 90 to 99,9 % of the ceramic composition consists of zirconium oxide, yttrium oxide and hafnium oxide and 0.01% to 10 % of the ceramic composition consists of aluminium oxide and other metal oxides, preferably 95 to 99,9 % of the ceramic composition comprises zirconium oxide, yttrium oxide and hafnium oxide and 0.01 to 5 % aluminium oxide and other metal oxides, more preferably 98 to 99,9 % of the ceramic composition consists of zirconium oxide, yttrium oxide and hafnium oxide and 0.01 to 2 % of the ceramic composition consists of aluminium oxide and other metal oxides, more preferably 99 to 99,9 % of the ceramic composition comprises zirconium oxide, yttrium oxide and hafnium oxide and 0.01 to 1 % aluminium oxide and other metal oxides, e.g. 99.72 % of the ceramic composition will be composed of zirconium oxide, yttrium oxide and hafnium oxide.

In a preferred embodiment the ceramic composition comprises 88 to 95 % by weight of zirconium oxide, 3 to 7 % by weight yttrium oxide, 1 to 4 % by weight of hafnium oxide, 0.1 to 1 % by weight aluminium oxide and 0.01 to 0.5% of other metal oxides, preferably the ceramic composition comprises 90 to 94 % by weight of zirconium oxide, 4 to 6 % by weight yttrium oxide, 1.5 to 2.5 % by weight of hafnium oxide, 0.2 to 0.5 % by weight aluminium oxide and 0.02 % to 0.2 of other metal oxides, more preferably the ceramic composition comprises 92 to 93 % by weight of zirconium oxide, 5 to 6 % by weight yttrium oxide, 2 to 3 % by weight of hafnium oxide, 0.2 to 0.3 % by weight aluminium oxide and 0.02 to 0.05 % of other metal oxides, e.g. 92.61% by weight of zirconium oxide, 5.08% by weight yttrium oxide, 2.03% by weight of hafnium oxide, 0.254% by weight aluminium oxide and 0.036% of other metal oxides.

In another embodiment of the abutment (12) according to the present invention said abutment (12) further comprises a crown or superstructure in one piece, whereas the crown or superstructure which is separately manufactured has been sintered together with the abutment to form one piece.

In a further aspect the present invention provides a two-part dental implant made of biocompatible ceramics comprising a dental implant (1) and an abutment (12) according to the present invention.

In one embodiment of the two-part dental implant according to the present invention the dental implant (1) and the abutment (12) are connected to each other with an adhesive.

In a preferred embodiment the two-part dental implant according to the present invention are adhered to each other by any adhesive (also termed cement). A large number of suitable adhesives are known in the art of dentistry suitable to connect two parts of , e.g. an implant. Preferably the adhesive is selected from the group of adhesives comprise without limitation: zinc phosphate cements, carboxylate cements, glass ionomer cements, hybrid cements, composite cements, cyanacrylate adhesives, and polyacrylate adhesives.

In another embodiment of the two-part implant according to the present invention said abutment (12) further comprises a crown or superstructure in one piece, whereas the crown or superstructure has been sintered together with the abutment to form one piece.

In a further aspect of the present invention, the object thereof is solved by providing a three-part dental implant made of biocompatible ceramics comprising a dental implant (1) according to the present invention, an abutment (12) according to the present invention and a crown or superstructure

In another aspect the present invention pertains to the use of the dental implant (1) as described above for insertion into the mandibular or maxillary bone of a patient.

In one preferred embodiment of the present invention, the dental implant according to the present invention is screwed and/or cemented into the mandibular or maxillary bone of a patient.

In a further aspect the present invention pertains to the use of the abutment (12) as described above for the connection to a dental implant (1) described above

In a further aspect the present invention pertains to the use of an abutment (12) described above as a prosthetic head for a crown or superstructure.

In a further aspect the present invention concerns a method of implanting a two-part dental implant of the present invention, preferably wherein the threaded-profile of the outer threaded part (2) comprises an apical flank and a distal flank, more preferably the acute angle (β) between the apical flank and the longitudinal axis is smaller than the acute angle (γ) between the distal flank and the longitudinal axis, wherein the dental implant (1) is implanted into the bone and the abutment (12) is attached to the dental implant after 3 months, 2 months, 4 weeks, 3 weeks, 2 weeks, 7, 6, 5, 4, 3, 2, 1 days after the implantation of the dental implant.

In a particular preferred embodiment the abutment is attached immediately, e.g. within a period of 0 to 3 hours after implantation of the dental implant.

### BRIEF DESCRIPTION OF THE DRAWINGS

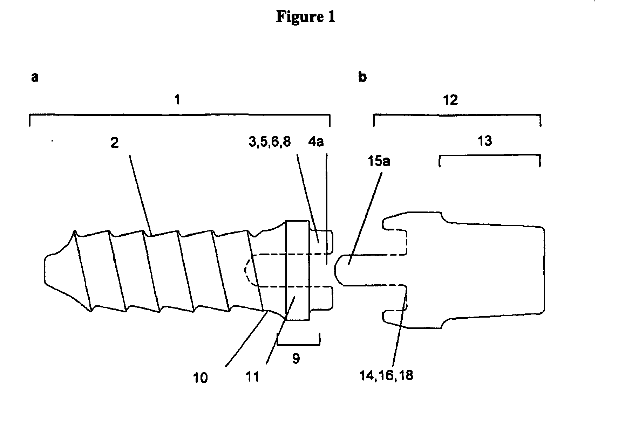

Figure 1: Shows a two-part medicinal device. The first part is the a) dental implant (1) comprising a outer threaded part (2), a contact region (3), an indentation (4a), a transgingival part (9), a middle part (11) and securing means (5) having a polygonal shape (8) in form of a multifaced protrusion (6); and the second part is the (b) abutment (12) comprising a prosthetic head (13), a contact region (14), a protrusion (15a) and securing means (16) in form of a multifaced indentation (18).

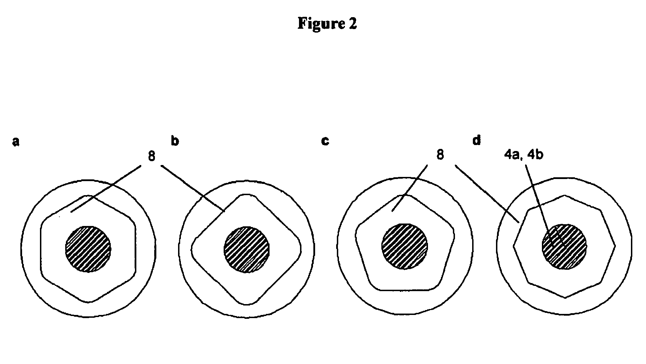

Figure 2: Shows the top view of the dental implant, wherein the securing means are shown in form of a multifaced protrusion (6) or indentation (7), having a polygonal shape (8) with 6 faces (a), 4 faces (b), 5 faces (c) and 8 faces (d).

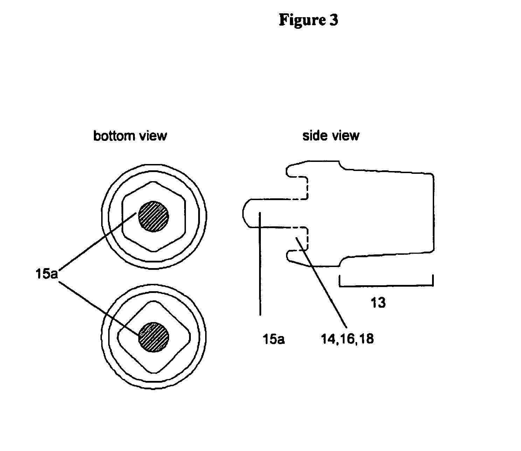

Figure 3: Shows the bottom view and the side view of the abutment having a protrusion (15a)

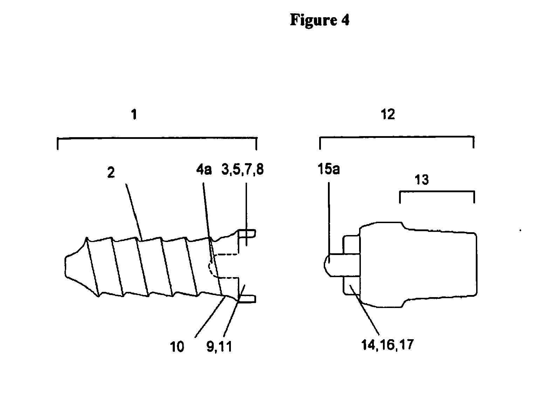

Figure 4: Shows a two-part medicinal device: a) dental implant (1) comprising a outer threaded part (2), a contact region (3), an indentation (4a), a transgingival part (9), a middle part (11) and securing means (5) in from of a multifaced indentation (7). (b) Abutment (12) comprising a prosthetic head (13), a contact region (14), a protrusion (15a) and securing means (16) in form of a multifaced protrusion (17).

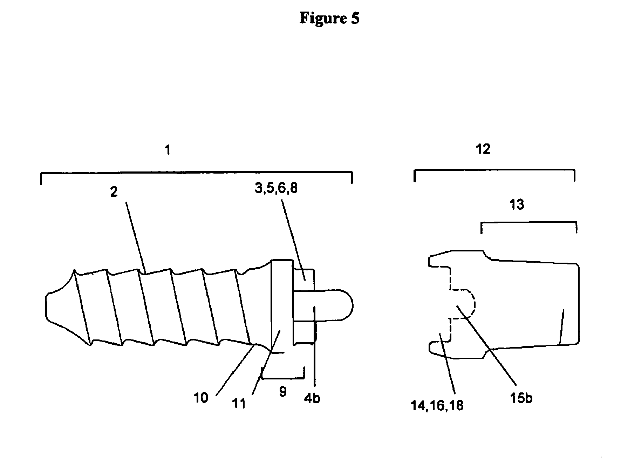

Figure 5: Shows a two-part medicinal device: a) dental implant (1) comprising a outer threaded part (2), a contact region (3), a protrusion (4b), a transgingival part (9) and securing means (5) in from of a multifaced protrusion (6). (b) Abutment (12) comprising a prosthetic head (13), a contact region (14), an indentation (15b) and securing means (16) in form of a multifaced indentation (18).
Figure 6: Shows a section of the threaded part in one preferred embodiment of the invention, wherein the shaft is tapered towards apical. The angle α depicts the pitch of the threaded part, (a) the apical length of the shaft and (b) the distal length of the shaft.

### LISTING OF REFERENCE NUMERALS

- 1: dental implant
- 2: outer threaded part (of the dental implant)
- 3: contact region (of the dental implant)
- 4a: indentation (of the dental implant)
- 4b: protrusion (of the dental implant)
- 5: securing means (of the dental implant)
- 6: multifaced protrusion (of the dental implant)
- 7: multifaced indentation (of the dental implant)
- 8: polygonal shape (of the dental implant)
- 9: transgingival part (of the dental implant)
- 10: conical junction (of the dental implant)
- 11: middle part (of the dental implant)
- 12: abutment
- 13: prosthetic head (of the abutment)
- 14: contact region (of the abutment)
- 15a: protrusion (of the abutment)
- 15b: indentation (of the abutment)
- 16: securing means (of the abutment)
- 17: multifaced protrusion (of the abutment)
- 18: multifaced indentation (of the abutment)

1. Dental implant (1) made of biocompatible ceramics having an outer threaded part (2); a contact region (3) for contacting an abutment (12); an indentation (4a)/or protrusion (4b) within the contact region (3) suitable to insert a protrusion (15a)/or to be inserted into an indentation (15b) of said abutment (12), wherein the contact surface of said indentation (4a)/or protrusion (4b)/ with said protrusion (15a)/or indentation (15b) is essentially free of threaded parts; and securing means (5) preventing rotation of an engaged abutment (12) in the form of a multifaced protrusion (6) or indentation (7) located in said contact region (3).
2. Dental implant (1) according to item 1, wherein the thread-profile of said outer threaded part (2) comprises an apical flank and a distal flank, wherein an acute angle (β) between the apical flank and the longitudinal axis is smaller than an acute angle (γ) between the distal flank and the longitudinal axis.
3. Dental implant (1) made of biocompatible ceramics having an outer threaded part (2); a contact region (3) for contacting an abutment (12), and an indentation (4a)/or protrusion (4b) within the contact region (3) suitable to insert a protrusion (15a)/or to be inserted in an indentation (15b) of said abutment (12), wherein the contact surface of said indentation (4a)/or protrusion (4b) with said protrusion (15a)/or indentation (15b) is essentially free of threaded parts; and wherein the thread-profile of said outer threaded part (2) comprises an apical flank and a distal flank, wherein the acute angle (β) between the apical flank and the longitudinal axis is smaller than the acute angle (γ) between the distal flank and the longitudinal axis.
4. Dental implant (1) according to item 3, wherein said contact region (3) has securing means (5) preventing rotation of an engaged abutment (12).
5. Dental implant (1) according to item 4, wherein said securing means (5) is in the form of a multifaced protrusion (6) or indentation (7) located in the contact region (3).
6. Dental implant (1) according to any one of items 1 to 5, wherein a surface area of said outer threaded part (2) has a micro roughness of between 2 micron and 50 micron.
7. Dental implant (1) according to any one of items 1 to 6, wherein said outer threaded part (2) has a diameter and length suitable to be inserted into the manibular or maxillary bone.
8. Dental implant (1) according to item 7, wherein said outer threaded part (2) has a length of between 5 and 20 mm and an outer diameter of between 2 and 7 mm.
9. Dental implant (1) according to any one of items 1 to 8, wherein said outer threaded part (2) has a thread lead having a pitch of between 6 and 18 degree, the distance between the single threads is between 1 and 2 mm, and the distance between the core drilling and the external threads is between 0.2 and 0.4 mm.
10. Dental implant (1) according to any one of items 1 to 9, wherein the apical flank has an acute angle (β) to the longitudinal axis of between 5 and 20 degree; the distal flank has an acute angle (γ) to the longitudinal axis of between 40 and 70 degree; the difference between the inner diameter (i) and the outer diameter (o) is of between 0.1 and 3 mm; and the apical peak of said threaded part (2) is conical formed meeting in a blunt bottom, wherein the cone has a radius between 1.5 and 2.5 mm.
11. Dental implant (1) according to item 1 to 2 and 4 to 10, wherein said securing means is of polygonal shape (8).
12. Dental implant (1) according to item 11, wherein said polygonal shape (8) has 3, 4, 5, 6, 7, 8, 9 or 10 faces.
13. Dental implant (1) according to any one of items 1 to 12, wherein the dental implant (1) further comprises a transgingival part (9) in one piece.
14. Dental implant (1) according to item 13, wherein the contact region (3) is localized on the transgingival part (9) of the dental implant (1).
15. Dental implant (1) according to any one of items 13 or 14, wherein said transginigval part (9) has a middle part (11) and securing means (5).
16. Dental implant (1) according to any one of items 13 to 15, wherein a surface area of said transgingival part (9) has a micro roughness of less than 2 micron.
17. Dental implant (1) according to any one of items 1 to 16, wherein the cross section of said indentation (4a)/or protrusion (4b) at the contact region (3) is selected from the group comprising of round, oval and multifaced.
18. Dental implant (1) according to item 1 to 17, wherein said indentation (4a)/or protrusion (4b) has a diameter of between 0.5 mm and 6 mm and a length of between 1 mm and 19 mm.
19. Dental implant (1) according to any one of items 1 to 18, wherein the biocompatible ceramics comprises a ceramic material selected from the group consisting of zirconium oxide, aluminium oxide, yttrium oxide, hafnium oxide, silicon oxide, magnesium oxide, and cerium oxide.
20. Abutment (12) made of biocompatible ceramics, having a prosthetic head (13) and a contact region (14) with a protrusion (15a)/or indentation (15b), suitable to be inserted into an indentation (4a)/or suitable to insert a protrusion (4b) of a contact region (3) of a dental implant (1) according to any preceding claims.
21. Abutment (12) according to item 20, wherein said protrusion (15a)/or indentation (15b), is essentially free of any threaded parts.
22. Abutment (12) according to item 21, wherein the cross section of said protrusion (15a)/or indentation (15a), is selected from the group comprising of round, oval, and multifaced.
23. Abutment (12) according to any one of items 20 to 22, wherein said protrusion (15a)/or indentation (15b) has a diameter of between 0.5 mm and 6 mm and a length of between 1 mm and the length of the corresponding dental implant.
24. Abutment (12) according to any one of items 20 to 23, wherein said contact region (14) has securing means (16) preventing rotation of an engaged dental implant (1).
25. Abutment (12) according to item 24, wherein said securing means (16) is in the form of a multifaced protrusion (17) or indentation (18) in the contact region (14).
26. Abutment (12) according to item 25, wherein said multifaced protrusion (6) or indentation (7) is of polygonal shape (8).
27. Abutment (12) according to item 26, wherein said polygonal shape (8) has 3, 4, 5, 6, 7, 8, 9 or 10 faces.
28. Abutment (12) according to any one of items 20 to 27, wherein said prosthetic head (13) has a diameter of between 1 and 5 mm, which might vary over the length, and a length between 2 and 10 mm measured from the contact region (14) to the coronal region of said abutment.
29. Abutment (12) according any one of items 20 to 28, wherein the biocompatible ceramics comprises a ceramic material selected from the group consisting of zirconium oxide, aluminium oxide, yttrium oxide, hafnium oxide, silicon oxide, magnesium oxide and cerium oxide.
30. Abutment (12) according to any one of items 20 to 29, wherein said abutment further comprises a crown or superstructure in one piece.
31. Two-part dental implant made of biocompatible ceramics comprising a dental implant (1) according to items 1 to 19 and an abutment (12) according to items 20 to 29.
32. Two-part dental implant according to item 31, wherein the dental implant (1) and the abutment (12) are connected to each other with an adhesive.
33. Two-part dental implant according to item 32, wherein said adhesive is selected from the group consisting of zinc phosphate cement, carboxylate cement, glass ionomer cement, hybrid cement, composite cements, cyanacrylate, and polyacrylate.
34. Two-part dental implant according to any one of items 31 to 33, wherein said abutment (12) further comprises a crown or superstructure in one piece.
35. Three-part dental implant made of biocompatible ceramics comprising a dental implant (1) according to items 1 to 19, an abutment (12) according to items 20 to 29 and a crown or superstructure.
36. Use of the dental implant (1) according to any one of items 1 to 19, for inserting into the mandibular or maxillary bone of a patient.
37. Use of the dental implant (1) according to item 36, wherein the dental implant (1) is screwed or cemented into the mandibular or maxillary bone of a patient.
38. Use of an abutment (12) according to any one of items 20 to 29, for connecting to a dental implant (1) according to items 1 to 20.
39. Use of a crown or superstructure, for connecting to the prosthetic head (13) of an abutment (12) according to any one of items 20 to 29.

## Claims

1. Dental implant (1) made of biocompatible ceramics having an outer threaded part (2); a contact region (3) for contacting an abutment (12); an indentation (4a)/or protrusion (4b) within the contact region (3) suitable to insert a protrusion (15a)/or to be inserted into an indentation (15b) of said abutment (12), wherein the contact surface of said indentation (4a)/or protrusion (4b)/ with said protrusion (15a)/or indentation (15b) is essentially free of threaded parts; and securing means (5) preventing rotation of an engaged abutment (12) in the form of a multifaced protrusion (6) or indentation (7) located in said contact region (3).

2. Dental implant (1) according to claim 1, wherein a surface area of said outer threaded part (2) has a micro roughness of between 2 micron and 50 micron.

3. Dental implant (1) according to claim 2, wherein said outer threaded part (2) has a length of between 5 and 20 mm and an outer diameter of between 2 and 7 mm.

4. Dental implant (1) according to any one of claim 1 to 3, wherein said securing means is of polygonal shape (8).

5. Dental implant (1) according to any one of claims 1 to 4, wherein the cross section of said indentation (4a)/or protrusion (4b) at the contact region (3) is selected from the group comprising of round, oval and multifaced.

6. Dental implant (1) according to any one of claims 1 to 5, wherein the biocompatible ceramics comprises a ceramic material selected from the group consisting of zirconium oxide, aluminium oxide, yttrium oxide, hafnium oxide, silicon oxide, magnesium oxide, and cerium oxide.

7. Abutment (12) made of biocompatible ceramics, having a prosthetic head (13) and a contact region (14) with a protrusion (15a)/or indentation (15b), suitable to be inserted into an indentation (4a)/or suitable to insert a protrusion (4b) of a contact region (3) of a dental implant (1) according to any preceding claims.

8. Abutment (12) according to claim 7, wherein said protrusion (15a)/or indentation (15b), is essentially free of any threaded parts.

9. Abutment (12) according to claim 8, wherein the cross section of said protrusion (15a)/or indentation (15a), is selected from the group comprising of round, oval, and multifaced.

10. Abutment (12) according to any one of claims 7 to 9, wherein said contact region (14) has securing means (16) preventing rotation of an engaged dental implant (1).

11. Abutment (12) according to claim 10, wherein said securing means (16) is in the form of a multifaced protrusion (17) or indentation (18) in the contact region (14).

12. Abutment (12) according to claim 11, wherein said multifaced protrusion (6) or indentation (7) is of polygonal shape (8).

13. Abutment (12) according any one of claims 7 to 12, wherein the biocompatible ceramics comprises a ceramic material selected from the group consisting of zirconium oxide, aluminium oxide, yttrium oxide, hafnium oxide, silicon oxide, magnesium oxide and cerium oxide.

14. Abutment (12) according to any one of claims 7 to 13, wherein said abutment further comprises a crown or superstructure in one piece.

15. Two-part dental implant made of biocompatible ceramics comprising a dental implant (1) according to claims 1 to 6 and an abutment (12) according to claims 7 to 14.

16. Dental implant (1) made of biocompatible ceramics having an outer threaded part (2); a contact region (3) for contacting an abutment (12), and
(i) an indentation (4a) within the contact region (3) suitable to insert a protrusion (15a) of said abutment (12), wherein the contact surface of said indentation (4a) with said protrusion (15a) is essentially free of threaded parts; or
(ii) and a protrusion (4b) within the contact region (3) suitable to be inserted in an indentation (15b) of said abutment (12), wherein the contact surface of said protrusion (4b) with said indentation (15b) is essentially free of threaded parts; and wherein the thread-profile of said outer threaded part (2) comprises an apical flank and a distal flank, wherein the acute angle (β) between the apical flank and the longitudinal axis is smaller than the acute angle (γ) between the distal flank and the longitudinal axis.
